# EUROPÄISCHE PATENTSCHRIFT

(11) **EP 0 686 107 B1**
(45) Veröffentlichungstag und Bekanntmachung des Hinweises auf die Patenterteilung: **02.01.1997**
(21) Anmeldenummer: 94910382.4
(22) Anmeldetag: 07.03.1994
(51) Int. Cl.: B61D 35/00, B60R 15/04, B64D 11/02, E03D 5/016

(54) **TOILETTENANLAGE**
TOILET SYSTEM
SYSTEME DE TOILETTE

(30) Priorität: 06.03.1993 DE 4307102
(43) Veröffentlichungstag der Anmeldung: 13.12.1995
(73) Patentinhaber: NIETHAMMER GmbH, D-64579 Gernsheim (DE)
(72) Erfinder: NIETHAMMER, Michael, D-64579 Gernsheim (DE); SCHÄFER, Karl, D-64579 Gernsheim (DE)
(74) Vertreter: Hoeger, Stellrecht & Partner
(86) Internationale Anmeldenummer: EP9400678
(87) Internationale Veröffentlichungsnummer: WO9420347

(56) Entgegenhaltungen:
- EP-A- 0 298 199
- DE-A- 4 123 803

## Beschreibung

Die Erfindung betrifft eine Toilettenanlage, insbesondere für Schienenfahrzeuge, Flugzeuge, Reisebusse oder dergleichen, für den mobilen Einsatz. Die Erfindung betrifft insbesondere eine Toilettenanlage mit einer eine Spülvorrichtung und eine Toilettenschüssel umfassenden Toilette, einem Fäkaltank zur Aufnahme von aus der Toilette stammendem Schmutzwasser, wobei der Fäkaltank eine Trennvorrichtung zum Trennen fester und flüssiger Anteile des Schmutzwassers umfaßt und wobei der Trennvorrichtung die flüssigen Anteile über einen ersten Auslaß als Grauwasser entnehmbar sind, und mit einem Hygienisierungstank, welcher das im Fäkaltank abgetrennte Grauwasser über einen Grauwassereinlaß aufnimmt und welcher eine Vorrichtung zum Hygienisieren des Grauwassers umfaßt, welches danach als hygienisiertes Grauwasser einem zweiten Auslaß entnehmbar ist.

Solche Toilettenanlagen sind beispielsweise von der Firma Protec, Partner für Umwelttechnik GmbH als sogenannte Biotoiletten bekannt, deren Funktionsweise nachfolgend kurz beschrieben werden soll.

Bei den genannten Biotoiletten werden die Fäkalien zusammen mit der Spülflüssigkeit in den Fäkaltank geleitet, der als Behandlungstank und Bioreaktor fungiert. Der Fäkaltank ist sowohl im Bodenbereich als auch in den Seitenflächen mit einem speziell beschichteten Trägermaterial ausgekleidet, durch dessen Poren die flüssigen Stoffe ungehindert ablaufen können, während die Feststoffe auf dem Trägermaterial zurückgehalten werden.

Organismen und Bakterien, die sich in den menschlichen Fäkalien finden, konzentrieren sich dort und bewirken eine Zersetzung der Fäkalien. Dabei freigesetzte Geruchsstoffe werden mittels Tankentlüftung ins Freie geleitet. Die Flüssigstoffe gelangen als Grauwasser in einen Hygienisierungstank, welcher eine Vorrichtung zum Hygienisieren des Grauwassers umfaßt. Bei der Hygienisierung wird insbesondere eine Keimzahlreduktion erzielt, die das so hygienisierte Grauwasser vollkommen umweltverträglich macht, so daß es an die Umgebung abgegeben werden kann.

Die im Fäkaltank zurückgehaltenen Feststoffe werden durch biologische Zersetzungsprozesse bereits nach zwei Wochen auf ca. 50 % ihres ursprünglichen Volumens reduziert und in der Folgezeit täglich um weitere 5 % abgebaut.

Die Vorteile dieses biologischen Toilettensystems sind neben der Unabhängigkeit von kommunalen Kläranlagen und der absoluten Umweltverträglichkeit darin zu sehen, daß der Inhalt des Fäkaltanks durch Volumenreduktion der Feststoffe nur selten zu entleeren ist. Darüber hinaus ist das Trägermaterial so ausgebildet, daß eine langjährige Betriebsdauer möglich ist. Der Behandlungstank bzw. Fäkaltank muß lediglich einmal pro Jahr mit normalem Wasser gespült werden. Diese Behandlung reicht aus, um die Durchlässigkeit des Trägermaterials in ausreichendem Maße zu gewährleisten, und weitere Wartungsarbeiten sind nicht erforderlich. Nachteilig bei diesen Toilettenanlagen ist, daß sie zum einen größere Mengen an Frischwasser zum Spülen der Toilettenschüssel benötigen und andererseits hygienisiertes Grauwasser an die Umgebung abgeben.

Die Notwendigkeit eines größeren Vorratstanks für Frischwasser und die Notwendigkeit, hygienisiertes Grauwasser an die Umgebung abgeben zu können, schränkt die Anwendung dieser Toilettenanlage in einer ganzen Reihe von Fällen ein.

Aus dem deutschen Gebrauchsmuster G 91 16 209 ist eine Toilettenanlage für Reisebusse bekannt, bei der eine Reduzierung des mitzuführenden Volumens an Spülflüssigkeit dadurch erzielt wird, daß alternativ zwischen einer Frischwasserspülung sowie einer Chemieumlaufspülung umgeschaltet werden kann.

Nachteilig bei dieser Art der Spülung ist insbesondere die Verwendung von Chemikalien zum Hygienisieren des Schmutzwassers insgesamt, d.h. ohne Abtrennung der Feststoffe, und die Notwendigkeit, Chemikalienlösungen mitführen zu müssen. Die Entsorgung der Chemikalienspülflüssigkeit ist zudem problematisch.

Ferner ist aus der EP-A-298 199 zur Minimierung einer Trinkwasserzuladung in Flugzeugen bekannt, aufbereitetes Abwasser zum Spülen der Toilette wiederzuverwenden.

Aufgabe der vorliegenden Erfindung ist es, eine Toilettenanlage der eingangs beschriebenen Art so zu verbessern, daß diese mit merklich verringerten Frischwasseranteilen auskommt.

Diese Aufgabe wird erfindungsgemäß dadurch gelöst, daß die Toilettenanlage eine Umwälzvorrichtung mit einer Umwälzpumpe und einer Rückführleitung umfaßt, wobei die Umwälzvorrichtung den zweiten Auslaß mit der Grauwasserseite des Hygienisierungstanks verbindet, und daß die Umwälzvorrichtung mit der Spülvorrichtung verbunden ist und dieser bedarfsweise Anteile des hygienisierten Grauwassers als Spülflüssigkeit zuführt.

Die erfindungsgemäßen Toilettenanlagen bieten sich insbesondere zum Einbau in modernen Schienenfahrzeugen etc. an.

Bei einer bevorzugten Ausführungsform der Erfindung ist die Spülvorrichtung so ausgebildet, daß sie eine Vorrichtung zum pulsierenden Abgeben der Spülflüssigkeit an die Toilettenschüssel umfaßt, wobei mit verringerten Spülflüssigkeitsmengen eine gleichwertige Reinigung der Toilettenschüssel erzielt werden kann.

Bei einer weiter bevorzugten Toilettenanlage wird die Spülvorrichtung ferner so ausgebildet sein, daß die Spülflüssigkeit in mehreren Spülphasen an die Toilettenschüssel abgegeben wird, wobei mindestens eine Hauptspülphase zum Entfernen der Fäkalien und eine Nachspülphase vorgesehen sind. Bei dieser Ausführungsform der Erfindung bietet es sich insbesondere an, als Spülflüssigkeit für die Hauptspülphase oder die erste Spülphase hygienisiertes Grauwasser zu verwenden und in einer nachfolgenden Phase Frischwasser, so daß der Spüleffekt insgesamt vollständig dem Ergebnis der Spülung mit Frischwasser entspricht, wobei jedoch nur ein Bruchteil dessen an Frischwasser benötigt wird wie bisher üblich.

Beispielsweise wird bei einem normalen Spülgang ein Volumen an Spülflüssigkeit von ca. 6 1 benötigt. Bei der Auftrennung in zwei Spülphasen können der Großteil dieser Spülflüssigkeit dem hygienisierten Grauwasservorrat entnommen werden und für die nachfolgende Spülphase reicht ein Volumen von ca. 0,5 bis 1 1 Frischwasser vollständig aus, um einen Zustand der Toilettenanlage herzustellen, wie er bei der bekannten Spülung mit Frischwasser herrscht.

Diese erfindungsgemäßen Toilettenanlagen sind völlig gleichwertig mit den in letzter Zeit Verbreitung findenden Vakuumtoilettenanlagen und sind darüber hinaus aufgrund ihres einfacheren Wirkprinzips und bedeutend geringeren Frischwasserverbrauchs betriebssicherer.

Vorzugsweise wird die Spülvorrichtung mit einer elektronischen Steuerung ausgerüstet, die das Abgeben der Spülflüssigkeit in unterschiedlichen Spülphasen bzw. das Pulsieren der Spülflüssigkeit und/oder die Verwendung unterschiedlicher Spülflüssigkeiten in den verschiedenen Spülphasen steuert.

Darüber hinaus kann die elektronische Steuerung zusätzlich noch mit Sensoren zur Prüfung der Füllstände der einzelnen Tanks ausgerüstet werden, und im Falle des Erreichens maximaler Füllstände ist vorstellbar, daß von der elektronischen Steuerung automatisch ein Stellglied zur Blockierung der Zugangstür der Toilettenanlage betätigt wird. Ebenso kann die Blockierung der Zugangstür zur Toilettenanlage ausgelöst werden, wenn inder Umwälzvorrichtung ein Defekt auftritt, beispielsweise, wenn die Umwälzpumpe ausfallen sollte.

Alternativ kann selbstverständlich auch eine mechanische Steuervorrichtung zum Steuern der unterschiedlichen Spülvorgänge verwendet werden.

Im Zusammenhang mit der Verwendung einer elektronischen Steuerung bietet sich insbesondere an, daß die Umwälzvorrichtung eine stromabwärts zur Umwälzpumpe angeordnete Mehrwegventilanordnung umfaßt, über welche der Umwälzvorrichtung das zum Spülen benötigte hygienisierte Grauwasser entnehmbar ist. Die elektronische Steuerung wird dann im Falle der Anforderung von Spülflüssigkeit den Kreislauf des hygienisierten Grauwassers vom Hygienisierungstank über die Umwälzvorrichtung zurück zur Grauwasserseite unterbrechen und kurzzeitig einen Teil des hygienisierten Grauwassers der Spülvorrichtung zuführen. Danach wird der Kreislauf für das hygienisierte Grauwasser wieder geschlossen.

Häufig ist die Umwälzpumpe für das hygienisierte Grauwasser so dimensioniert, daß diese einen ausreichenden Druck für die Spülung der Toilettenschüssel bereitstellt. In diesem Falle ist es völlig ausreichend, wenn die Spülflüssigkeit, in diesem Falle hygienisiertes Grauwasser, mit dem durch die Umwälzpumpe zur Verfügung stehenden Druck an die Spülvorrichtung der Toilette abgegeben wird.

Alternativ zu der Mehrwegventillösung kann vorgesehen sein, daß die Umwälzvorrichtung stromabwärts zur Umwälzpumpe eine Leitungsverzweigung umfaßt, von der ein erster Zweig mit der Grauwasserseite des Hygienisierungstanks und ein zweiter Zweig mit der Spülvorrichtung verbunden ist. Ist die Leistung der Umwälzpumpe für den Spüldruck ausreichend, so genügt es, daß am Ende des zweiten Zweiges der Leitungsverzweigung ein Schließventil angebracht ist, das im Falle der Anforderung von Spülflüssigkeit geöffnet wird. Im Falle, daß die Umwälzpumpe der Umwälzvorrichtung eine geringere Leistung aufweist, kann vorgesehen sein, daß die Leitungsverzweigung mit einem Zweig zu einem hydrostatischen Druckspeicher, der einen Vorratsbehälter umfaßt, führt, welcher einen Eingang für die Rückführleitung sowie einen mit der Grauwasserseite des Hygienisierungstanks verbundenen Ausgang und einen mit der Spülvorrichtung verbundenen Ausgang umfaßt. Hier kann dann mit relativ geringer Pumpenleistung der Vorratsbehälter gefüllt und mittels des hydrostatischen Druckes, wie sonst bei Spülkastenspülvorrichtungen üblich, gespült werden. Die zur Grauwasserseite zurückführende Leitung wird vorzugsweise von einem Überlauf im Vorratsbehälter, der gleichzeitig Spülkasten sein kann, befüllt. Eine solche Anlage ist sehr kostengünstig und wartungsfreundlich, da nur das Spülkastenventil notwendig ist, um alle Betriebszustände der Toilettenanlage zu realisieren.

Bei einer bevorzugten Ausführungsform wird vorgesehen, daß neben dem Vorratsbehälter zusätzlich ein Spülkasten bei der Spülvorrichtung vorhanden ist, welcher dann mit dem Ausgang für die Spülflüssigkeit des Vorratsbehälters verbunden ist.

Bei einer besonders bevorzugten Toilettenanordnung ist vorgesehen, daß die Spülflüssigkeit im wesentlichen in einem geschlossenen Kreislauf geführt wird, aus dem gegebenenfalls bedarfsweise Feststoffe nach der Abtrennung aus dem Fäkaltank ausgetragen werden.

Unabhängig von der jeweiligen Ausführungsform der Erfindung ist es wichtig, daß die Umwälzvorrichtung mit ihrer Umwälzleistung so ausgelegt ist, daß das hygienisierte Grauwasser in ausreichend kurzen Zeitabständen vollständig umgewälzt wird, so daß die Keimzahl im hygienisierten Grauwasser unter einem vorgegebenen Wert bleibt.

Diese und weitere Vorteile der Erfindung werden im folgenden noch anhand der Zeichnung näher erläutert. Es zeigen im einzelnen:

### Figuren 1 - 10

Verschiedene Ausführungsformen der erfindungsgemäßen Toilettenanlage mit einer Umwälzvorrichtung für hygienisiertes Grauwasser in einer Blockschemadarstellung.

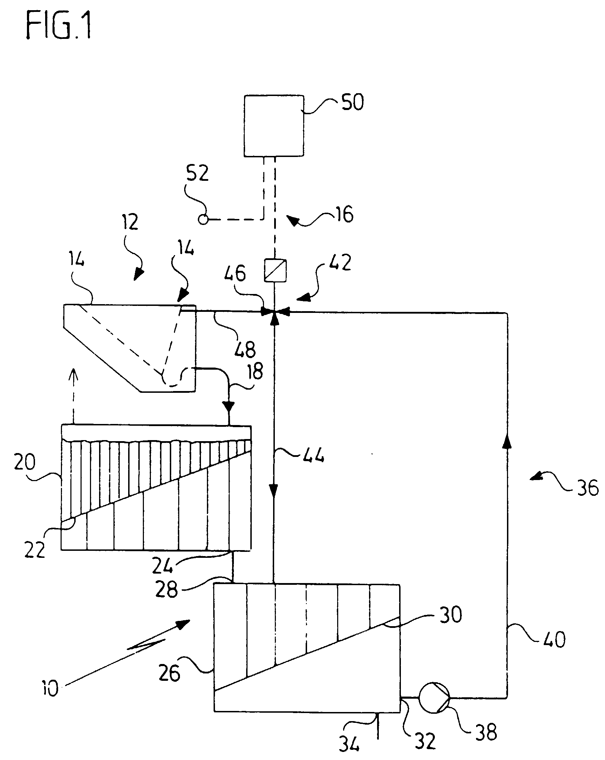

Figur 1 zeigt eine insgesamt mit dem Bezugszeichen 10 bezeichnete Toilettenanlage in schematischer Darstellung. Die Toilettenanlage 10 umfaßt eine Toilette 12 mit einer Toilettenschüssel 14 und einer Spülvorrichtung 16.

Die Toilettenschüssel 14 ist zur Weiterleitung der mit Fäkalien versetzten Spülflüssigkeit über eine Schmutzwasserleitung 18 mit einem Fäkaltank 20 verbunden, in dem in bekannter Weise eine Trennung von festen und flüssigen Anteilen des Schmutzwassers vorgenommen wird. Die hierfür notwendige Trennvorrichtung 22 ist nur schematisch angegeben.

Hierfür kann allgemein jede geeignete Trennvorrichtung verwendet werden, insbesondere die eingangs beschriebene.

Die flüssigen Anteile des Schmutzwassers werden als Grauwasser über einen ersten Auslaß 24 an einen Hygienisierungstank 26 abgegeben, welcher über einen Grauwassereinlaß 28 mit dem ersten Auslaß 24 des Fäkaltanks 20 verbunden ist.

Der Hygienisierungstank 26 umfaßt eine Hygienisierungs-vorrichtung 30, welche beispielsweise ein Mikroporenfilter sein kann, welches im Grauwasser enthaltene Keime zurückhält und im wesentlichen keimfreies, hygienisiertes Grauwasser durchläßt, welches an einem zweiten Auslaß 32 des Hygienisierungstanks 26 zur Verfügung steht. Üblicherweise ist auf der Seite des hygienisierten Grauwassers des Hygienisierungstanks 26 ein weiterer Auslaß 34 vorgesehen, über den der Hygienisierungstank 26 entleerbar ist.

Vom zweiten Auslaß 32 führt eine Umwälzvorrichtung 36, welche eine Umwälzpumpe 38 und eine Rückführleitung 40 umfaßt zu einem elektronisch ansteuerbaren Mehrwegeventil 42, welches einerseits an der Rückführleitung 40 angeschlossen ist und andererseits mit einem Leitungsabschnitt 44 wieder grauwasserseitig im Hygienisierungstank 26 verbunden ist. Ein weiterer Anschluß 46 ist mit der Spülvorrichtung 16 der Toilette 12 verbunden und stellt dieser hygienisiertes Grauwasser für den Spülvorgang als Spülflüssigkeit zur Verfügung. Die Spülvorrichtung 16 umfaßt neben einer Spülwasser führenden Leitung 48 eine elektronische Steuerung 50, über die nach Betätigung eines Schalters oder Taste 52 das Mehrwegventil 42 so umgesteuert wird, daß Spülflüssigkeit über die Leitung 48 der Spülvorrichtung 16 zur Verfügung gestellt wird. Ohne Anforderung über die Taste 52 steuert die elektronische Steuerung 50 die Ventilstellung des Mehrwegventils 42 so, daß vom Hygienisierungstank 26 und dessen Auslaß 32 über die Umwälzpumpe 38, die Rückführleitung 40 und den Leitungsabschnitt 44 ein Kreislauf für das hygienisierte Grauwasser gebildet wird. Dies ist wichtig, da zwischen den Spülvorgängen das hygienisierte Grauwasser entweder ständig oder in vorgegebenen Zeitabständen umgewälzt werden kann und dabei wieder die Hygienisierungsvorrichtung 30 passiert, so daß sichergestellt werden kann, daß das als Spülflüssigkeit zur Verfügung stehende hygienisierte Grauwasser nur eine Keimzahl aufweist, die unter einem vorgegebenen Wert liegt und damit für den gegebenen Zweck hygienisch unbedenklich ist.

Beim vorliegenden Beispiel ist die Pumpenleistung der Umwälzpumpe 38 so groß, daß der von der Umwälzpumpe 38 erzeugte Druck für den Spülvorgang der Spülvorrichtung 16 vollständig ausreichend ist. Dies bedeutet, daß nach einer Umsteuerung des Mehrwegventils 42 über die die Rückführleitung 40 über den Auslaß 46 des Mehrwegventils 42 mit der Leitung 48 verbunden wird, ein ausreichender Wasserdruck zur Spülung der Toilettenschüssel 14 zur Verfügung steht. Die elektronische Steuerung 50 kann dabei so ausgebildet sein, daß sie die Spülflüssigkeit in mehreren Pulsen der Spülvorrichtung 16 zuführt, so daß die Reinigung der Toilettenschüssel 14 mit dosierten Wassermengen vorgenommen wird. Dies dient zur Minimierung der Verwendung an Spülflüssigkeit. Die rückgeführte Spülflüssigkeit, d.h. hier hygienisiertes Grauwasser, gelangt mit den beim Spülvorgang aufgenommenen Fäkalien über die Schmutzwasserleitung 18 in den Fäkaltank 20, in dem wiederum eine Abtrennung der Feststoffe über die Trennvorrichtung 22 stattfindet. Das dabei erzeugte Grauwasser als flüssiger Anteil des Schmutzwassers gelangt über den Auslaß 24, den Grauwassereinlaß 28 zum Hygienisierungstank 26, in dem das Grauwasser über die Hygienisierungsvorrichtung 30 wieder zu hygienisiertem Grauwasser gewandelt wird, das jetzt für einen erneuten Spülvorgang in unveränderter hygienischer Qualität zur Verfügung steht.

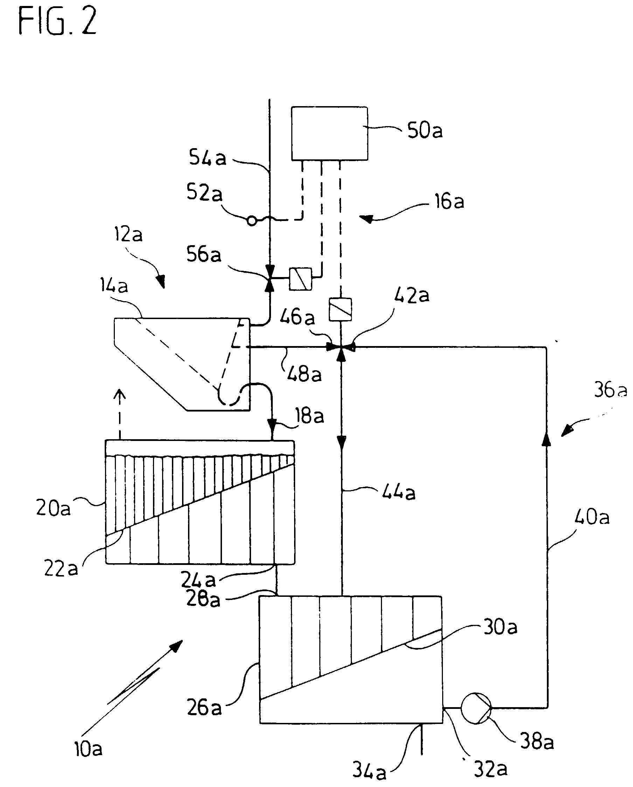

Figur 2 zeigt eine Variante der Ausführungsform der Erfindung, wie sie in Figur 1 gezeigt und vorstehend beschrieben wurde. Die dort insgesamt mit dem Bezugszeichen 10a versehene Toilettenanlage unterscheidet sich von der vorbeschriebenen Toilettenanlage 10 der Figur 1 dadurch, daß diese Toilettenanlage 10a mit einer weiteren Leitung 54a mit einem Frischwasservorrat (nicht gezeichnet) verbunden ist. In der Frischwasserleitung 54a ist ein elektronisch ansteuerbares Ventil 56a angeordnet, welches von einer elektronischen Steuerung 50a aus nach Anforderung über eine Taste 52a betätigt wird. Bei dieser Ausführungsform der Erfindung ist vorgesehen, daß Spülflüssigkeit aus der Rückführleitung 40a in Form hygienisiertem Grauwasser der Spülvorrichtung 16a zugeführt wird, so daß in einer ersten Spülphase als Hauptspülvorgang die Fäkalien im wesentlichen von der Toilettenschüssel 14a abgelöst und über die Leitung 18a dem Fäkaltank 20a zugeführt werden. In einer Nachspülphase wird über die Leitung 54a und das Ventil 56a kurzzeitig Frischwasser der Spülvorrichtung 16a zugeführt, wobei mit diesem Spülpuls die Reste an hygienisiertem Grauwasser von der Oberfläche der Toilettenschüssel abgewaschen werden, so daß nachfolgend ein Zustand hergestellt ist, wie er bei einer normalen Spülung mit Frischwasser herrscht. Der Verbrauch an Frischwasser ist bei dieser Ausführungsform gegenüber den Frischwasserspülungen nach dem Stand der Technik drastisch reduziert, da üblicherweise ein Frischwasservolumen für diesen Nachspülvorgang von ca. 0,5 bis 1 l gut ausreichend ist.

Vorzugsweise wird bei dieser Ausführungsform der Hygienisierungstank 26a größer dimensioniert als dies bei der Ausführungsform der Figur 1, d.h. dem Hygienisierungstank 26, der Fall ist, da hier eine Speichermöglichkeit des zusätzlich verwendeten Frischwasservolumens im Nachspülvorgang bereitgestellt werden muß. Zusätzlich ist hier natürlich auch der nicht dargestellte Frischwassertank notwendig, der jedoch gegenüber herkömmlichen Frischwasserspülvorrichtungen bedeutend kleiner dimensioniert werden kann, ohne daß dadurch die Benutzungsfrequenz bzw. die Zahl der möglichen Benutzungen der Toilette reduziert wäre. Zusätzlich hat diese Ausführungsform gegenüber dem Stand der Technik den Vorteil, daß selbst im Falle des vollständigen Verbrauchs des Frischwassers für den Nachspülvorgang auf eine Betriebsweise umgeschaltet werden kann, wie sie für die Ausführungsform in Figur 1 gilt. Hierbei ist es möglich, daß die elektronische Steuerung 50a einen Sensor umfaßt, der die Füllstandhöhe im nicht gezeigten Frischwassertank prüft und im Falle der Entleerung des Frischwasservorrats die Betriebsweise auf die Betriebsweise umschaltet, wie sie im Zusammenhang mit Figur 1 beschrieben wurde.

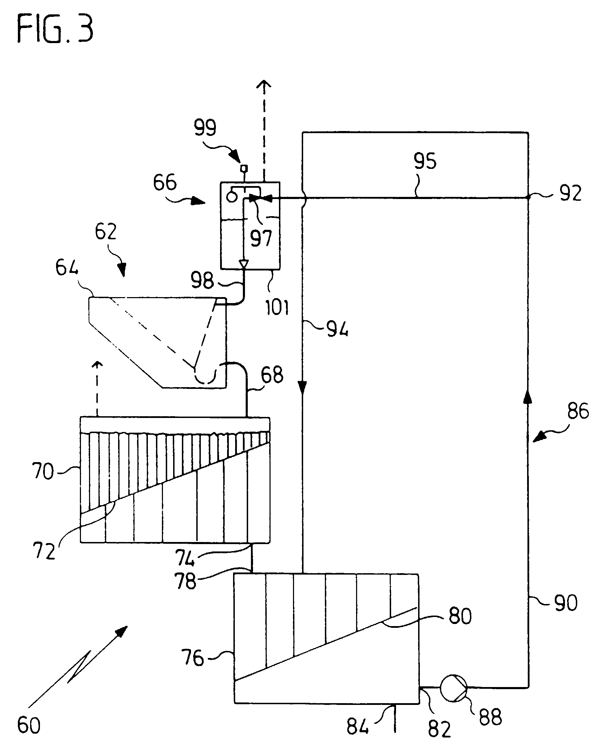

Figur 3 zeigt eine insgesamt mit dem Bezugszeichen 60 bezeichnete Toilettenanlage gemäß vorliegender Erfindung, welche eine Toilette 62 mit einer Toilettenschüssel 64 und einer Spülvorrichtung 66 umfaßt, welche mit einer Schmutzwasserleitung 68 mit einem Fäkaltank 70 verbunden ist. Im Fäkaltank 70 ist eine Trennvorrichtung 72 vorgesehen, welche das Schmutzwasser in seine festen und flüssigen Anteile trennt. Die flüssigen Anteile werden als Grauwasser über den ersten Auslaß 74 zum Hygienisierungstank 76 und dessen Grauwassereinlaß 78 gegeben, in welchem das Grauwasser über die Hygienisierungsvorrichtung 80 zu hygienisiertem Grauwasser umgewandelt wird. Das hygienisierte Grauwasser steht am zweiten Auslaß 82 für eine Umwälzvorrichtung 86 zur Verfügung. Der Hygienisierungstank 76 weist neben dem zweiten Auslaß 82 einen weiteren Auslaß 84 auf, der der Entleerung des Hygienisierungstanks 76 bei Wartungsarbeiten dient.

Die Umwälzvorrichtung 86 umfaßt eine Umwälzpumpe 88 sowie eine Rückführleitung 90, die sich an einer Leitungsverzweigung 92 gabelt und mit einem ersten Zweig 94 zum Hygienisierungstank auf dessen Grauwasserseite zurückführt, während ein zweiter Zweig 95 zur Spülvorrichtung 66 führt. Wichtig ist, daß der erste Zweig 94 dem Grauwasser einen höheren Strömungswiderstand bietet als der zweite Zweig 94.

Der zweite Zweig 95 ist an seinem in die Spülvorrichtung 66 mündenden Ende mittels eines Ventils 97 verschlossen. Über eine Betätigungsvorrichtung 99, die mechanisch oder elektrisch ausgelegt sein kann, wird das im Normalzustand geschlossene Ventil 97 geöffnet, und das hygienisierte Grauwasser wird über die Leitung 95 als Spülflüssigkeit der Spülvorrichtung 66 zur Verfügung gestellt. Im Falle, daß die Umwälzpumpe 88 eine ausreichende Leistung aufweist, kann die Spülung der Toilettenschüssel 64 in derselben Weise erfolgen, wie dies zuvor im Zusammenhang mit den Figuren 1 und 2 beschrieben ist. Reicht der von der Umwälzpumpe 88 aufgebaute Flüssigkeitsdruck für die in den Figuren 1 und 2 beschriebene Spülmethode nicht aus, kann vorgesehen sein, daß die Spülvorrichtung 66 einen Vorratsbehälter 101 aufweist, der nach Betätigung der Betätigungsvorrichtung 99 einen Schwall der Spülflüssigkeit über eine Leitung 98 der Toilette 62 zuführt.

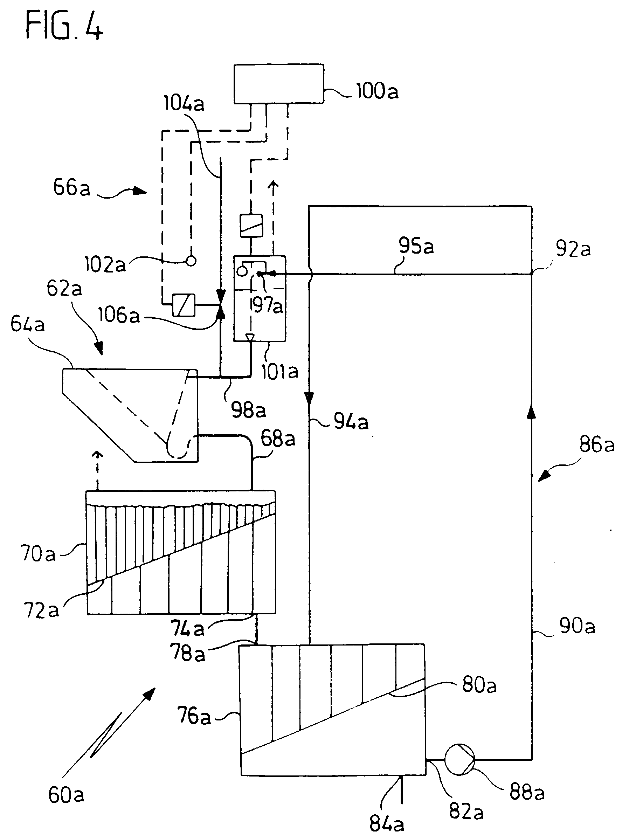

Die Einzelheiten der in Figur 4 dargestellten Toilettenanlage 60a entsprechen in weiten Teilen denen der Figur 3, und identische Teile sind mit denselben Bezugszeichen sowie dem Zusatz a versehen. Da diese dieselbe Funktion aufweisen und die Anordnung ansonsten nicht geändert ist, beschränkt sich die folgende Beschreibung auf die Unterschiede zwischen den Anlagen der Figuren 3 und 4.

Zusätzlich zu der Toilettenanlage, wie sie in Figur 3 gezeigt ist, weist die Toilettenanlage 60a einen Frischwasseranschluß auf, der über eine Leitung 104a und ein Ventil 106a gebildet wird. Die Spülvorrichtung 66a weist eine elektronische Steuerung 100a auf, welche sowohl den Spülvorgang mit Spülflüssigkeit in Form von hygienisiertem Grauwasser, welches über eine Zweigleitung 85a von der Umwälzvorrichtung 86a bezogen wird, als auch den nachfolgenden Spülgang mit Frischwasser steuert.

Dieselben Hinweise zum Betrieb der Toilettenanlage 60a gelten, wie sie bereits in der Beschreibung betreffend die Figuren 1 bis 3 gegeben wurden, betreffend die Steuerung der Frischwasserzufuhr bzw. des Spülwasserzuflusses gelten entsprechende Ausführungen zu der in Figur 2 gezeigten Toilettenanlage 10a.

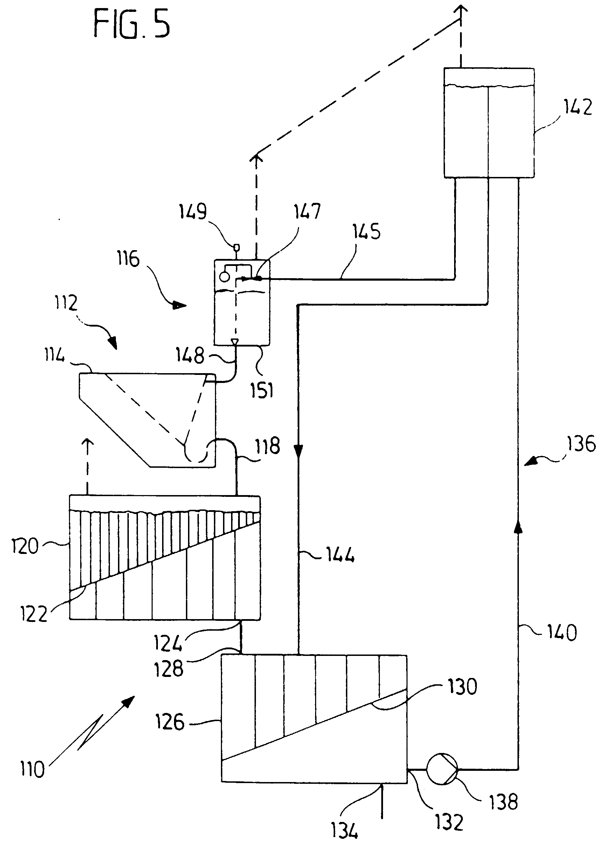

In der Figur 5 ist eine weitere Ausführungsform der vorliegenden Erfindung beschrieben, bei der eine Toilettenanlage 110 eine Toilette 112 mit einer Toilettenschüssel 114 und einer Spülvorrichtung 116 umfaßt. Eine Schmutzwasserleitung führt von der Toilettenschüssel 114 zu einem Fäkaltank 120, welcher eine Trennvorrichtung 122 beinhaltet, in der feste von flüssigen Anteilen des Schmutzwassers 118 voeinander getrennt werden und welche an einem ersten Auslaß 124 des Fäkaltanks 120 Grauwasser abgibt.

Das Grauwasser aus dem ersten Auslaß 124 wird einem Hygienisierungstank 126 über einen Grauwassereinlaß 128 zugeführt, welcher seinerseits eine Hygienisierungsvorrichtung 130 beinhaltet, in welcher das Grauwasser entkeimt wird, so daß an einem zweiten Auslaß 132 hygienisiertes Grauwasser zur Verfügung steht. Der Hygienisierungstank 126 weist einen weiteren Auslaß mit einer Entleerungsleitung 134 auf, über die der Hygienisierungstank 126 für Wartungsarbeiten entleert werden kann.

An dem zweiten Auslaß 132 schließt sich eine Umwälzvorrichtung 136 an, welche eine Umwälzpumpe 138 sowie eine Rückführleitung 140 aufweist, über die hygienisiertes Grauwasser aus dem zweiten Auslaß 132 empfangen und über einen Leitungsabschnitt 144 wieder dem Hygienisierungstank 126, jedoch auf seiner Grauwasserseite, zugeführt wird. Damit läßt sich das hygienisierte Grauwasser je nach Bedarf kontinuierlich oder in bestimmten Zeitabständen umwälzen, so daß sichergestellt ist, daß die notwendige Keimfreiheit des hygienisierten Grauwassers gewährleistet bleibt.

Die Rückführleitung 140 mündet zunächst in einen Behälter 142, in dem ein bestimmtes Volumen an hygienisiertem Grauwasser für Spülzwecke bevorratet wird. Über eine weitere Leitung 145 ist der Vorratsbehälter 142 mit der Spülvorrichtung 116 verbunden und befüllt seitens der Spülvorrichtung über ein Ventil 147 einen Spülkasten 151.

Die einfachste Art und Weise, um sicherzustellen, daß in dem Vorratsbehälter 142 stets eine ausreichende Menge an Spülflüssigkeit zur Verfügung steht, selbst wenn die Umwälzpumpe 138 nur eine äußerst geringe Pumpleistung aufweist, kann so bewerkstelligt werden, daß der Leitungsabschnitt 144, der das hygienisierte Grauwasser wieder grauwasserseitig dem Hygienisierungstank 126 zuführt, in den Vorratsbehälter 142 hineinragt und in einer Höhe endet, die der vorgegebenen gewünschten Normalfüllhöhe des Vorratsbehälters 142 entspricht. Damit wird nur im Falle, daß der Vorratsbehälter 142 seine Soll-Füllhöhe erreicht hat, über einen einfachen Überlauf das weiter von der Umwälzpumpe 138 geförderte hygienisierte Grauwasser dem Leitungsabschnitt 144 zugeführt und rezirkuliert.

Im Falle der Betätigung einer Betätigungsvorrichtung 149, die mechanisch oder elektrisch bzw. elektronisch gesteuert sein kann, wird ein Schwall Spülflüssigkeit aus dem Spülkasten 151 der Toilettenschüssel 114 zugeführt und nachfolgend wird beispielsweise über eine Schwimmerregelung das Ventil 147 so lange geöffnet, bis der Spülkasten 151 über die Leitung 145 und das Ventil 147 wieder bis auf seine Soll-Füllhöhe befüllt ist.

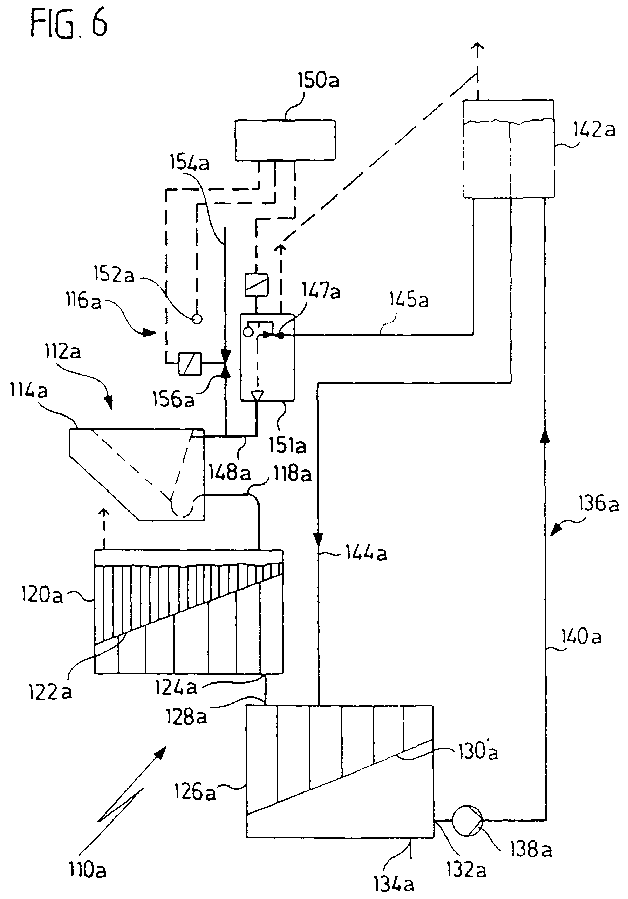

Eine alternative Ausführungsform hierzu ist in Figur 6 gezeigt, bei der wiederum gleiche Bauteile der Toilettenanlage 110a mit denselben Bezugszeichennummer wie in Figur 5 bezeichnet sind, jedoch mit dem Zusatz a. Auf eine detaillierte Beschreibung der Toilettenanlage 110a wird hier verzichtet, da sie in entsprechender Weise gilt wie in Figur 5. Im folgenden wird deshalb nur auf die Unterschiede zu der in Figur 5 gezeigten Toilettenanlage 110 eingegangen.

Diese Unterschiede bestehen im wesentlichen darin, daß die Toilettenanlage 110a mit einem Frischwasservorrat über eine Leitung 154a und ein Ventil 156a in Verbindung steht. Damit läßt sich die Zwei-Phasen-Spülung, wie sie bereits für die Figuren 2 und 4 beschrieben wurde, auch bei dieser Ausführungsform realisieren. Gesteuert wird die Zwei-Phasen-Spülung durch eine elektronische Steuerung 150a, die zum einen den Hauptspülvorgang durch ein Öffnen des Ventils im Spülkasten 151a auslöst, von dem über die Leitung 148a ein Schwall an Spülflüssigkeit, d.h. hygienisiertem Grauwasser, an die Toilettenschüssel 114a abgegeben wird, und nachfolgend zu diesem Hauptspülvorgang wird mit Frischwasser aus der Frischwasserleitung 154a nachgespült.

Der zeitliche Ablauf nach Anforderung eines Spülvorganges über einen Taster 152a wird, wie zuvor bei den Figuren 2 und 4 beschrieben, erfolgen. Eine demgegenüber etwas vereinfachte Ausführungsform zeigen die Figuren 7 und 8 mit einer Toilettenanlage 160 bzw. 160a, bei welcher eine Toilette 162 mit einer Toilettenschüssel 164 und einer Spülvorrichtung 166 über eine Leitung 168 mit einem Fäkaltank 170 verbunden ist.

Im Fäkaltank 170 ist eine Trennvorrichtung 172 zur Trennung von festen und flüssigen Anteilen des über die Leitung 168 erhaltenen Schmutzwassers vorgesehen, welche an einem ersten Auslaß 174 das Grauwasser als flüssigen Anteil des Schmutzwasser bereitstellt. Vom ersten Auslaß 174 gelangt das Grauwasser zum Hygienisierungstank 176 über dessen Grauwassereinlaß 178.

Im Hygienisierungstank 176 ist eine Hygienisierungsvorrichtung 180 angeordnet, welche Grauwasser zu hygienisiertem Grauwasser umwandelt, welchletzteres nur noch eine unter hygienischen Gesichtspunkten zulässige Keimzahl aufweist.

Auslaßseitig wird das hygienisierte Grauwasser am Auslaß 162 einer Umwälzvorrichtung 186 zur Verfügung gestellt, welche eine Umwälzpumpe 188 sowie eine Rückführungsleitung 190 aufweist.

Der Hygienisierungstank 176 weist ferner einen weiteren Auslaß 184 auf, an den eine Entleerungsleitung angeschlossen ist.

Die Rückführungsleitung 190 der Umwälzvorrichtung 186 führt zu einem Vorratstank 192, in dem das hygienisierte Grauwasser bis zu einer vorgegebenen Füllhöhe bevorratet wird.

Über eine Betätigungsvorrichtung 199 läßt sich das hygienisierte Grauwasser aus dem Vorratstank 192 bei Bedarf für einen Spülvorgang über eine Leitung 198 der Toilettenschüssel 164 schwallweise zuführen.

Von dem Vorratsbehälter 192 führt über einen Überlauf, der die maximale Füllhöhe des Vorratsbehälters bestimmt, über einen Leitungsabschnitt 194 zur Grauwasserseite des Hygienisierungstanks 176 zurück.

Die Aufarbeitung der Spülflüssigkeit aus hygienisiertem Grauwasser, die als Schmutzwasser nach dem Spülvorgang über die Leitung 168 dem Fäkaltank 170 zugeführt wird, geschieht, wie zuvor beschrieben.

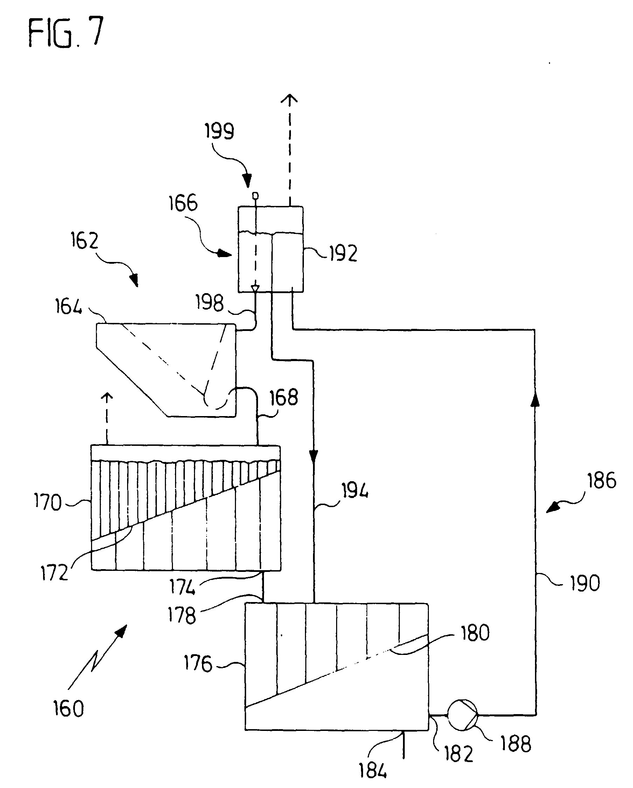

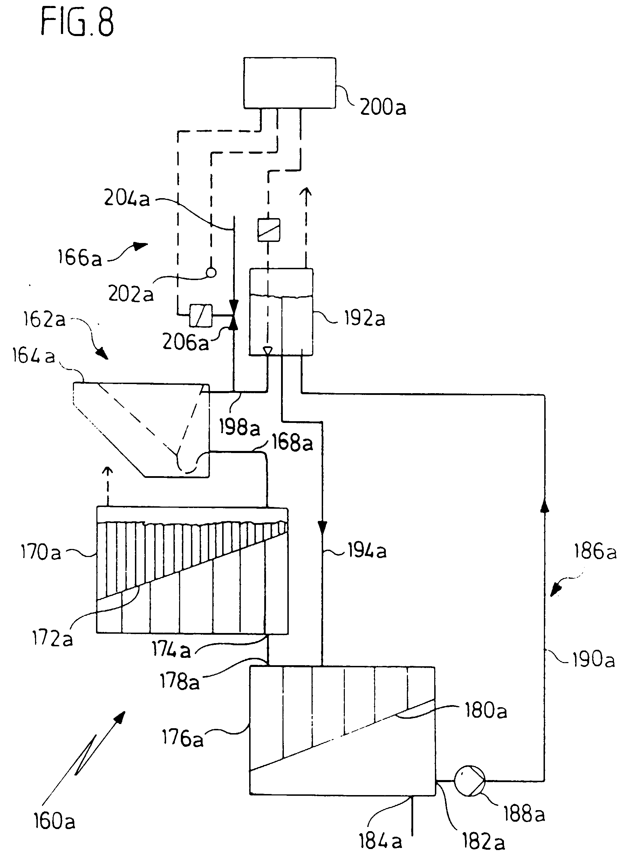

Eine Abwandlung der in Figur 7 gezeigten Ausführungsform ist, wie bereits zuvor erwähnt, in Figur 8 in Form einer Toilettenanlage 160a dargestellt, und für die Beschreibung dieser Toilettenanlage gelten die Ausführungen, die zu Figur 7 gemacht worden sind, wobei identische Bestandteile der Toilettenanlagen mit demselben Bezugszeichen, jedoch mit dem Zusatz a, versehen sind.

Im folgenden wird nur noch auf die Unterschiede der beiden Toilettenanlagen 160 und 160a eingegangen.

Der wesentliche Unterschied zu der Ausführungsform gemäß Fig. 7 besteht bei der in Fig. 8 gezeigten Toilettenanlage 160a darin, daß diese über eine Leitung 204a mit einem Frischwasservorrat (nicht gezeigt) verbunden ist, der wie zuvor schon im Zusammenhang mit den Figuren 2, 4 und 6 beschrieben, bei einer zweite Spülphase nach dem Hauptspülgang, bei dem hygienisiertes Grauwasser verwendet wurde, genutzt wird. Nach Betätigung einer Auslösetaste 202a wird von einer elektronischen Steuerung 200a zunächst ein Schwall Spülwasser aus dem Vorratsbehälter 192a über die Leitung 198a der Toilettenschüssel 164a zugeführt. Daran anschließend wird Frischwasser über die Leitung 204a und ein Ventil 206a, welches ebenfalls von der elektronischen Steuerung 200a angesprochen wird, der zweiten Spülphase der Toilettenschüssel 164a zugeführt. Das Ergebnis ist bereits wie zuvor im Zusammenhang mit den Figuren 2, 4 und 6 beschrieben, derart, daß trotz der deutlichen Einsparung an Frischwasser derselbe Zustand hergestellt ist als ob eine komplette Frischwasserspülung stattgefunden hätte.

Entsprechend der Zunahme des Volumens des hygienisierten Grauwassers im Laufe der Zeit der Benutzung der Toilettenanlage 160a wird der Hygienisierungstank 176a entsprechend groß zu dimensionieren sein.

Auch für diese Ausführungsform gilt, daß im Falle der Entleerung des Frischwasser-Vorrates die elektronische Steuerung 200a vollständig umschalten kann auf eine Betriebsweise, wie sie für die Toilettenanlage 170 gemäß Fig. 7 gilt.

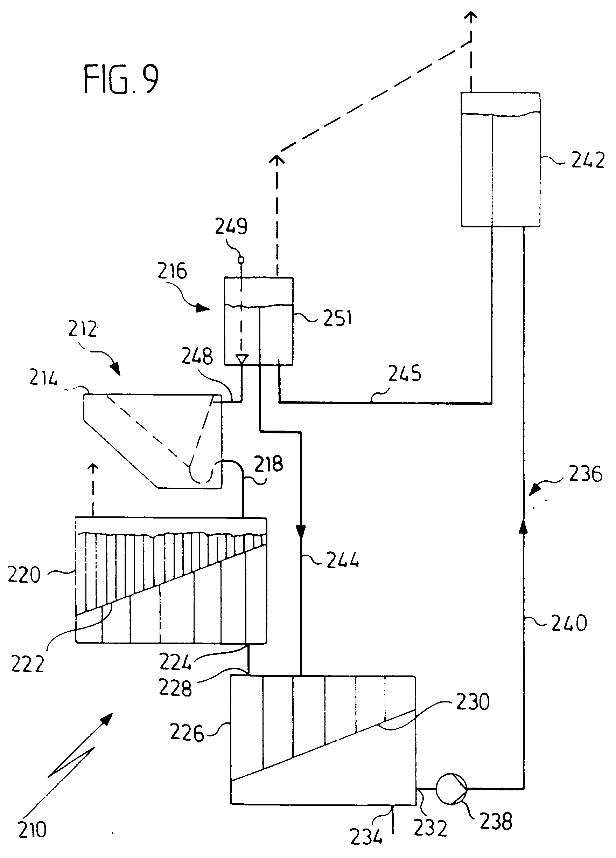

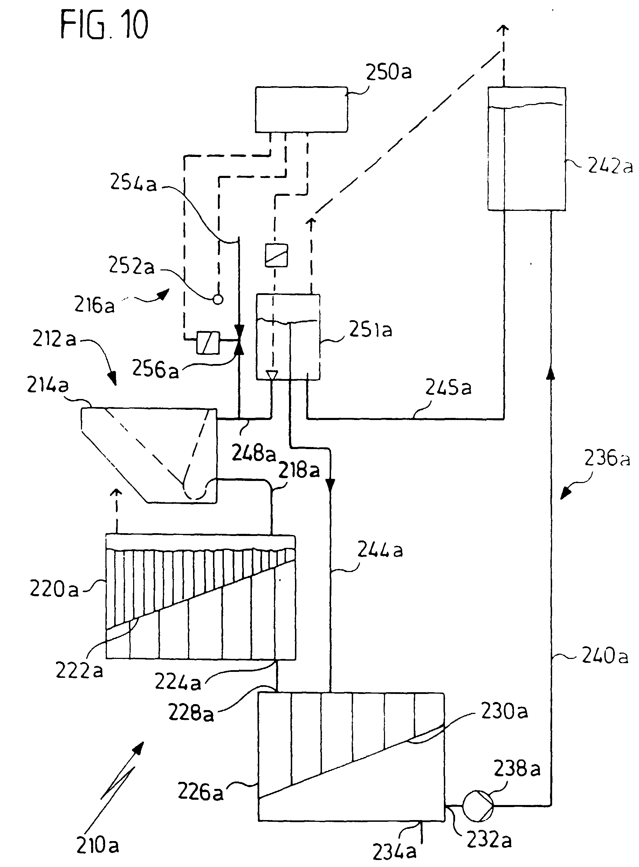

Die Figuren 9 und 10 zeigen schließlich zwei Ausführungsformen der vorliegenden Erfindung, bei der verglichen mit den Ausführungsformen der Figuren 7 und 8 ein weiterer Vorratsbehälter vorhanden ist, der mit Druckgefälle den Spülkasten befüllt. Im einzelnen zeigt Fig. 9 eine Toilettenanlage 210 mit einer Toilette 212, welche eine Toilettenschüssel 214 und eine Spülvorrichtung 216 umfaßt. Die Toilette 212 ist über eine Schmutzwasserleitung 218 mit einem Fäkaltank 220 verbunden, welcher eine Trennvorrichtung 222 zum Auftrennen von festen und flüssigen Anteilen des Schmutzwassers umfaßt. Die flüssigen Anteile des Schmutzwassers werden als Grauwasser an einem ersten Ausgang 224 zur Verfügung gestellt und gelangen über einen GrauwasserEinlaß 228 in einen Hygienisierungstank 226. Der Hygienisierungstank 226 beinhaltet eine Hygienisierungs-Vorrichtung 230, in der das Grauwasser von pathologischen Keimen befreit und mit einer zulässigen Keimzahl als hygienisiertes Grauwasser abgegeben wird. Das hygienisierte Grauwasser steht am zweiten Auslaß 232 zur Verfügung. Ein weiterer Auslaß 234 ist am Hygienisierungstank 226 vorgesehen, um diesen bei Bedarf, d.h. beispielsweise bei Wartungsarbeiten, entleeren zu können.

Am zweiten Ausgang 232 wird das hygienisierte Grauwasser von einer Umwälzvorrichtung 236 aufgenommen, welche eine Umwälzpumpe 238 sowie eine Rückführleitung 240 umfaßt. Von der Rückführleitung 240 gelangt das hygienisierte Grauwasser in einen Vorratsbehälter 242, welcher über eine Leitung 245 einen Spülkasten 251 speist. Die Leitung 245 endet innerhalb des Vorratsbehälters 242 auf einer Höhe, die der Sollfüllhöhe des Behälters 242 entspricht. Der Spülkasten 251 wird von der Leitung 245 von unten her befüllt, und die maximale Füllhöhe des Spülkastens 251 wird durch eine rückführende Leitung 244 bestimmt, die von einem die Sollfüllhöhe des Spülkastens bestimmenden Überlauf gespeist wird und welche grauwasserseitig in den Hygienisierungstank 226 mündet.

Bei einer Betätigung der Betätigungsvorrichtung 249 wird ein Schwall hygienisiertes Grauwasser als Spülflüssigkeit an die Toilettenschüssel 214 abgegeben, welcher die Fäkalien abspült und über die Leitung 218 dem Fäkaltank 220 zuführt. Die Reinigung des Schmutzwassers, d.h. dem hygienisierten Grauwasser einschließlich der abgespülten Fäkalien, geschieht wie zuvor beschrieben.

Die vorliegende Ausführungsform eignet sich ebenso wie die zuvor beschriebenen mit einem einen statischen Druck aufbauenden Vorratsbehälter in Kombination mit Umwälzpumpe 238 mit sehr geringer Pumpenleistung.

Wie zuvor wird in Fig. 10 eine ergänzende Alternative zu Fig. 9 beschrieben, bei der der wesentliche Aufbau gleichgeblieben ist, weshalb die identischen Bestandteile der hier gezeigten Toilettenanlage 210a mit denselben Bezugszeichen versehen sind, ergänzt um den Buchstaben a. Wesentlicher Unterschied ist wie bereits zuvor erwähnt, daß die Toilettenanlage 210a durch einen Anschluß 254a an eine Frischwasserversorgung ergänzt wird. Bei dieser Toilettenanlage 210a besteht die Möglichkeit nach einem Hauptspülvorgang mit hygienisiertem Grauwasser als Spülflüssigkeit eine Nachspülung mit Frischwasser vorzunehmen, so daß, wie zuvor beschrieben, ein Spüleffekt erzielt wird, der mit dem nach der Spülung mit Frischwasser vollständig identisch ist, wobei allerdings wesentliche Anteile an Frischwasser eingespart werden können.

Ganz allgemein darf bemerkt werden, daß bei jeder der in den Figuren 1 - 10 beschriebenen Ausführungsformen die Fäkaltanks sowie gegebenenfalls Vorratsbehälter und/oder Spülkästen, welche hygienisiertes Grauwasser führen, mit einer Entlüftung versehen sind. Im Falle daß getrennte Vorratsbehälter und Spülkästen verwendet werden, kann vorzugsweise die Entlüftung des Vorratsbehälters und des Spülkastens zusammengeführt und gemeinsam ins Freie geleitet werden.

Die Anordnung der Umwälzpumpe in der Umwälzvorrichtung ist nicht notwendigerweise auf den zweiten Auslaß auf der hygienisierten Grauwasserseite des Hygienisierungstanks beschränkt, sondern diese könnte auch zwischen den ersten Auslaß und dem Grauwassereingang angeordnet sein, bei entsprechenden Vorkehrungen in der das zirkulierende hygienisierte Grauwasser rückführenden Leitung, welche in dem grauwasserseitigen Teil des Hygienisierungstanks mündet.

Die einfachste Konstruktion ist jedoch in der ausgangsseitigen Anordnung der Umwälzpumpe bezogen auf den Hygienisierungstank zu sehen, da in einem solchen Falle die genannten Probleme nicht auftreten.

Die Umwälzpumpe der Umwälzvorrichtung hat zusätzlich den Effekt, daß sie den Vorgang der Hygienisierung des Grauwassers in der Hygienisierungsvorrichtung unterstützt und beschleunigt. Beispielsweise können hier Mikroporenfilter eingesetzt werden, welche einerseits Wasser und darin gelöste Bestandteile durchlassen, jedoch pathogene Keime oder dergleichen zurückhalten. Selbstverständlich wäre auch jede andere Art der Hygienisierung des Grauwassers und dessen Überführung in hygienisiertes Grauwasser einsetzbar und in den einzelnen Ausführungsbeispielen der Erfindung anwendbar, da es hier nicht auf die Art der Hygienisierung ankommt, sondern nur darauf, daß entsprechend keimfreies hygienisiertes Grauwasser für den Spülvorgang zur Verfügung gestellt wird.

Eine besondere Qualität erhält die Toilettenanlage der vorliegenden Erfindung dadurch, daß das gespeicherte hygienisierte Grauwasser ständig oder zumindest regelmäßig umgewälzt wird, so daß sich auch bei längeren Lagerzeiten des hygienisierten Grauwassers keine pathologisch bedenklichen Keimzahlen ergeben.

Ferner kann die Rückführung des hygienisierten Grauwassers von der Umwälzvorrichtung zum Grauwasserbereich der Toilettenanlage nicht nur im Hygienisierungstank enden sondern ebenso in der Grauwasserseite des Fäkaltanks. Prinzipiell wäre auch eine Rückführung über die Schmutzwasserleitung denkbar, die von der Toilettenschüssel zum Fäkaltank führt, jedoch würde dies einen ständigen Durchsatz bei der Trennvorrichtung im Fäkaltank bedeuten und insbesondere bei hohen Umwälzgeschwindigkeiten eine entsprechend größere Auslegung dieser Trennvorrichtung voraussetzen, was nicht wünschenswert ist.

## Patentansprüche

1. Toilettenanlage (10), insbesondere für Schienenfahrzeuge, Flugzeuge, Reisebusse oder dergleichen, mit einer eine Spülvorrichtung (16) und eine Toilettenschüssel (14) umfassenden Toilette (12), einem Fäkaltank (20) zur Aufnahme von aus der Toilette (12) stammendem Schmutzwasser, wobei der Fäkaltank (20) eine Trennvorrichtung (22) zum Trennen fester und flüssiger Anteile des Schmutzwassers umfaßt und wobei der Trennvorrichtung (22) die flüssigen Anteile über einen ersten Auslaß (24) als Grauwasser entnehmbar sind, und mit einem Hygienisierungstank (26), welcher das im Fäkaltank (20) abgetrennte Grauwasser über einen Grauwassereinlaß (28) aufnimmt und welcher eine Vorrichtung (30) zum Hygienisieren des Grauwassers umfaßt, welches danach als hygienisiertes Grauwasser einem zweiten Auslaß (32) entnehmbar ist, **dadurch gekennzeichnet**, daß eine Umwälzvorrichtung (36) mit einer Umwälzpumpe (38) und einer Rückführleitung (40) vorhanden ist, wobei die Umwälzvorrichtung (36) den zweiten Auslaß (32) mit der Grauwasserseite (28;26) verbindet, und daß die Umwälzvorrichtung (36) mit der Spülvorrichtung (16) verbunden ist und dieser bedarfsweise Anteile des hygienisierten Grauwassers als Spülflüssigkeit zuführt.

2. Toilettenanlage nach Anspruch 1, dadurch gekennzeichnet, daß die Spülvorrichtung (16) eine Vorrichtung zum pulsierenden Abgeben der Spülflüssigkeit an die Toilettenschüssel (14) umfaßt.

3. Toilettenanlage nach Anspruch 1 oder 2, dadurch gekennzeichnet, daß die Spülvorrichtung (16) so ausgebildet ist, daß die Spülflüssigkeit in mehreren Spülphasen an die Toilettenschüssel (14) abgegeben wird.

4. Toilettenanlage nach Anspruch 3, dadurch gekennzeichnet, daß als Spülflüssigkeit in einer ersten Spülphase hygienisiertes Grauwasser und in einer nachfolgenden Phase Frischwasser verwendbar ist.

5. Toilettenanlage nach einem der Ansprüche 1 bis 4, dadurch gekennzeichnet, daß die Spülvorrichtung (16) eine elektronische Steuerung umfaßt.

6. Toilettenanlage nach einem der Ansprüche 1 bis 5, dadurch gekennzeichnet, daß die Umwälzvorrichtung (36) eine stromabwärts zur Umwälzpumpe (38) angeordnete Mehrwegventilanordnung (42) umfaßt, über welche der Umwälzvorrichtung (36) das zum Spülen benötigte hygienisierte Grauwasser entnehmbar ist.

7. Toilettenanlage nach einem der Ansprüche 1 bis 5, dadurch gekennzeichnet, daß die Umwälzvorrichtung (36) stromabwärts zur Umwälzpumpe (38) eine Leitungsverzweigung umfaßt, von der ein erster Zweig (48) mit der Grauwasserseite des Hygienisierungstanks (26) und ein zweiter Zweig mit der Spülvorrichtung (16) verbunden ist.

8. Toilettenanlage nach Anspruch 7, dadurch gekennzeichnet, daß die Leitungsverzweigung einen einen hydrostatischen Druck erzeugenden Vorratsbehälter (142) umfaßt, welcher einen Eingang für die Rückführleitung (136) sowie einen mit der Grauwasserseite des Hygienierungstank (126) verbundenen Ausgang und einen mit der Spülvorrichtung (116) verbundenen Ausgang umfaßt.

9. Toilettenanlage nach Anspruch 8, dadurch gekennzeichnet, daß der Vorratbehälter (192) gleichzeitig ein Spülkasten der Spülvorrichtung (166) ist.

10. Toilettenanlage nach einem der voranstehenden Ansprüche, dadurch gekennzeichnet, daß die Anlage ein im wesentlichen geschlossener Kreislauf ist, aus dem gegebenenfalls bedarfsweise Feststoffe nach der Abtrennung im Fäkaltank (20) ausgetragen werden.

## Claims

1. Toilet system (10), in particular, for rail-bound vehicles, airplanes, coaches or the like, comprising a toilet (12) including a flushing device (16) and a toilet bowl (14), further comprising a faecal tank (20) for receiving sewage from said toilet (12), said faecal tank (20) including a separating device (22) for separating liquid and solid components of said sewage, and said liquid components being withdrawable as grey water from said separating device (22) through a first outlet (24), and further comprising a hygienization tank (26) receiving said grey water separated off in said faecal tank (20) through a grey water inlet (28) and including a device (30) for hygienizing said grey water which is then withdrawable as hygienized grey water from a second outlet (32), **characterized in that** a recirculating device (36) with a recirculating pump (38) and a return pipe (40) is provided, said recirculating device (36) connecting said second outlet (32) with said grey water side (28;26), and that said recirculating device (36) is connected to said flushing device (16) and, as required, supplies said flushing device with amounts of said hygienized grey water as flushing liquid.

2. Toilet system as defined in claim 1, characterized in that said flushing device (16) comprises a device for pulsing delivery of said flushing liquid to said toilet bowl (14).

3. Toilet system as defined in claim 1 or claim 2, characterized in that said flushing device (16) is designed such that said flushing liquid is delivered to said toilet bowl (14) in several flushing phases.

4. Toilet system as defined in claim 3, characterized in that hygienized grey water is usable as flushing liquid in a first flushing phase and fresh water in a subsequent phase.

5. Toilet system as defined in one of claims 1 to 4, characterized in that said flushing device (16) comprises an electronic control means.

6. Toilet system as defined in one of claims 1 to 5, characterized in that said recirculating device (36) comprises a multi-way valve arrangement (42) which is arranged downstream from said recirculating pump (38) and through which said hygienized grey water required for flushing is withdrawable from said recirculating device (36).

7. Toilet system as defined in one of claims 1 to 5, characterized in that said recirculating device (36) comprises a pipe branching downstream from said recirculating pump (38), a first branch (48) thereof being connected to said grey water side of said hygienization tank (26) and a second branch thereof being connected to said flushing device (16).

8. Toilet system as defined in claim 7, characterized in that said pipe branching comprises a storage tank (142) generating a hydrostatic pressure, said storage tank comprising an inlet for said return pipe (136), an outlet connected to said grey water side of said hygienization tank (126) and an outlet connected to said flushing device (116).

9. Toilet system as defined in claim 8, characterized in that said storage tank (192) is simultaneously a flush box of said flushing device (166).

10. Toilet system as defined in one of the preceding claims, characterized in that said system is an essentially closed circuit from which, if and as required, solids are withdrawn after having been separated off in said faecal tank (20).

## Revendications

1. Système de toilettes (10), en particulier pour des véhicules ferroviaires, des avions, des autocars ou similaires, comprenant des toilettes (12) avec un système de rinçage (16) et une cuvette (14) de toilettes, un réservoir de matières fécales (20) destiné à recevoir l'eau sale provenant des toilettes (12), le réservoir de matières fécales (20) comprenant un séparateur (22) des parts solides et liquides de l'eau sale, et les parts liquides étant susceptibles d'être extraites du séparateur (22) sous forme d'eau usée par l'intermédiaire d'une première sortie (24), et avec un réservoir d'hygiénisation (26) qui reçoit par l'intermédiaire d'une entrée d'eau usée (28) l'eau usée séparée dans le réservoir des matières fécales (20) et qui comprend un dispositif (30) d'hygiénisation de l'eau usée qui peut ensuite être extraite d'une seconde sortie (32) sous la forme d'eau usée hygiénisée, caractérisé en ce que le système de toilettes comprend un dispositif de recirculation (36) comportant une pompe de recirculation (38) et une conduite de retour (40), le dispositif de recirculation (36) reliant la seconde sortie (32) au côté eau usée (28 ; 26) et en ce que le dispositif de recirculation (36) est relié au dispositif de rinçage (16) et que selon les besoins, il amène à celui-ci des parts d'eau usée hygiénisée comme liquide de rinçage.

2. Système de toilettes selon la revendication 1, caractérisé en ce que le dispositif de rinçage (16) comprend un dispositif destiné à fournir par pulsations le liquide de rinçage à la cuvette (14) des toilettes.

3. Système de toilettes selon l'une ou l'autre des revendications 1 et 2, caractérisé en ce que le dispositif de rinçage (16) est réalisé de telle manière que le liquide de rinçage est fourni à la cuvette (14) des toilettes en plusieurs phases de rinçage.

4. Système de toilettes selon la revendication 3, caractérisé en ce que dans une première phase, de l'eau usée hygiénisée, et dans une phase consécutive, de l'eau fraîche, est susceptible d'être utilisée en tant que liquide de rinçage.

5. Système de toilettes selon l'une quelconque des revendications 1 à 4, caractérisé en ce que le dispositif de rinçage (16) comprend une commande électronique.

6. Système de toilettes selon l'une quelconque des revendications 1 à 5, caractérisé en ce que le dispositif de recirculation (36) comprend une soupape à plusieurs voies (42) agencée en aval de la pompe de recirculation (38), par l'intermédiaire de laquelle on peut extraire du dispositif de recirculation (36) l'eau usée hygiénisée nécessaire au rinçage.

7. Système de toilettes selon l'une quelconque des revendications 1 à 5, caractérisé en ce que le dispositif de recirculation (36) comprend en aval de la pompe de recirculation (38) une bifurcation de conduites à partir de laquelle une première branche (48) est reliée au côté eau usée du réservoir d'hygiénisation (26) et une seconde branche au dispositif de rinçage (16).

8. Système de toilettes selon la revendication 7, caractérisé en ce que la bifurcation de conduites comprend un réservoir (142) engendrant une pression hydrostatique, qui comprend une entrée pour la conduite de retour (136) ainsi qu'une sortie reliée au côté eau usée du réservoir d'hygiénisation (126) et une sortie reliée au dispositif de rinçage (116).

9. Système de toilettes selon la revendication 8, caractérisé en ce que le réservoir (192) est en même temps un réservoir de chasse d'eau du dispositif de rinçage (166).

10. Système de toilettes selon l'une quelconque des revendications précédentes, caractérisé en ce que le système est un circuit sensiblement fermé hors duquel, en cas de besoin, les parties solides peuvent être extraites après la séparation dans le réservoir de matières fécales (20).
